# EUROPEAN PATENT APPLICATION

(11) **EP 1 640 513 A1**
(43) Date of publication of application: **29.03.2006**
(21) Application number: 04023021.1
(22) Date of filing: 28.09.2004
(51) Int. Cl.: E03B 7/07

(54) **Connection device for hydraulic circuits**

(71) Applicant: Righi S.p.A., 28011 Armeno (No) (IT)
(72) Inventor: Farace, Enzo, 28011 Armano (No) (IT)
(74) Representative: Trupiano, Federica

(57) **Abstract**

The present invention relates to a connecting element for hydraulic circuits, of the type which can be inserted into a fluid supply line. The connecting element is equipped with an inlet section, being capable of coupling with the line, and an outlet section. The inlet section and the outlet section are in fluid communication through a channel in which the fluid that is supplied by the line flows. Advantageously, the connecting element comprises at least one filter element being capable of coupling in a removable manner with the connecting element, i.e. it can be inserted into a location where it intercepts the fluid in the channel and can be extracted from the connecting element, so that it can be washed.

## Description

The present invention relates to a connecting device or element for hydraulic circuits.

Connecting devices or elements for hydraulic circuits are available on the market, having the function to connect either different lengths of a line or two or more lines in fluid communication one another. Although herein below reference will be explicitly made to the field of residential water supply lines , the invention is not limited to this application field, but it can be also applied to different fields, for example in the industrial field for connecting lines for supplying oil, coolants, alimentary liquids, etc..

As a rule, in the buildings, the connecting elements for water supply lines are set upstream of faucets, sewers, boilers, water-heaters, etc.. The connections are for example built in, i.e. provided into the walls together with their respective pipelines. A typical example is represented by one or more connections being provided upstream of a shower faucet. Alternatively, the connecting elements may be employed outside the walls in order to connect various elements forming the hydraulic systems, such as for example flexible elements, boilers, faucets, etc., to the pipes of the main hydraulic circuit.

Generally, the hydraulic circuits in the buildings are provided with suitable elements in order to filter the impurities present in the water. Domestic hydraulic circuits are often provided with filters having the function of intercepting the solid particles present in the water, such as limestone particles, sand particles, ground particles, etc.. Filters are typically located either upstream or downstream of the connecting elements according to the water flowing direction, being often in succession along the same supply line, and they are interposed between the pipe and the connecting element.

The hydraulic circuits provided with the connecting elements and the conventional filters have several drawbacks. Particularly, these drawbacks are shown when the filter elements have to be cleaned or replaced, for example because they have been clogged by impurities or damaged.

In the case where a connecting element and its respective filter are provided outside a wall, i.e. installed at sight, directly accessible, the possible maintenance actions for cleaning or replacing the filter require the attendance of specialized operators, with an obvious increase in costs. In fact, in order to access the filter, when the latter is set between the connecting element and a pipeline, the connecting element requires to be separated from the pipeline, and hence, it is necessary to isolate and disassemble the respective length of the circuit. In private dwellings these operations are generally performed by a plumber.

The cleaning (or replacing) of a filter element is particularly hard and expensive if a circuit is provided with connecting elements and their respective filters, being embedded within a wall, as it is often provided at the ending length of the circuits supplying water to the showers in private dwellings. In fact, in the latter case, it is necessary to have access to the inside of the wall in order to reach for the filter element. Therefore, to the normal charges deriving from the operations on the hydraulic circuit, possible extra charges for having access to possible parts housed inside the wall are also added up.

For the reasons described above, the need for alternative solutions allowing a quick cleaning of the filter elements, which can be simply and cost-effectively performed also by those unskilled in the art has been felt for a long time.

The malfunctioning or the presence of dirt on a filter element may further cause a malfunctioning of the apparatus provided downstream of the same filter, and this is not certainly a minor drawback relative to the traditional systems drawbacks that have been already described above. For example, gas-fired boilers, thermostatic faucets, washing machines, etc., may not properly operate because of the cutting of the water flow due to a partially clogged filter. Furthermore, a damaged filter may allow solid particles to move, for example, to a gas-fired boiler and the boiler coil risks to be clogged by these particles, thus causing the malfunctioning.

The conventional connecting elements have several other drawbacks besides those already mentioned above. For example, they are often employed in order to connect two or more pipelines according to a curve shape, an S shape, etc.. This means that the connecting elements can be either straight or curved, with different curvature radius, or they can be of an eccentric shape, with an S-course. The water which flows through a curved connecting element may transmit to the same element some vibrations due either to the sudden change of direction (the water impact on a wall of the connection), or to the high speed of the water supplied to the connection or, moreover, to its turbulence, etc.. The vibrations transmitted by the fluid to the connecting element may be in turn transmitted to the pipelines which are connected to the same connecting element. Generally, these vibrations give rise to grating noises. For example, sudden changes in the water flow rate in a hydraulic circuit, due to a fast faucet opening or closing, may produce the phenomenon known as the "water hammer" in the respective pipelines, and this phenomenon is generally shown with strong vibrations as well as a grating whistle.

A further drawback of the conventional connecting elements lies in that they do not prevent the fluid from flowing back into its respective hydraulic circuit. For example, in some cases, following the closing of a faucet in a water supply pipeline, a water flow can flow back into the pipeline, i.e. it can flow through the same pipeline in the opposite direction to the set supply direction.

On the other hand, the need for preventing this backflow has been felt for a long time, given that the main standards provide that the drinking water supplied to private dwellings must be separated from the waste water.

The object of the present invention is to provide a connecting element for hydraulic circuits which solves the drawbacks of the prior art in a simply and cost-effective manner.

It is a further object of the present invention to provide a connecting element for hydraulic circuits allowing a reduction in the maintenance costs of the respective circuit, by improving at the same time the functionality thereof.

It is also an object of the present invention to provide a connecting element for hydraulic circuits preventing the backflow of the fluid into its respective line, in the opposite direction to the supply one.

A further object of the present invention is to provide a connecting element for hydraulic circuits enabling the vibrations transmitted to the element itself by the fluid flowing therethrough to be either reduced or absorbed.

These and other objects are achieved by the present invention which relates to a connecting element for hydraulic circuits, of the type comprising a body provided with at least a channel having an inlet section and an outlet section, said channel being connectable with a fluid supply line, characterized in that said body is further equipped with at least an aperture that opens, to the outside, into said channel between said inlet section and said outlet section, and that at least one filter element is insertable in a removable manner into said at least one aperture in order to intercept said fluid within said channel.

Said connection can be advantageously implemented in brass, steel, plastic, bronze or other suitable metallic alloys.

Advantageously, the filter element may be easily separated from the connecting element according to the present invention, so that it can be cleaned or replaced. Contrary to what has been provided by the prior art, in fact, the filter element can be easily reached for by an operator with no need to disassemble either part of the supply line or the same connecting element, with obvious economical advantages on the maintenance costs of the line. In fact, the filter element can be separated (removed) from the connection, then cleaned and inserted again into the connection itself, with no need to separate the connection from the pipeline of the relative hydraulic circuit. For the reason described above, when the connection of the invention is employed in the hydraulic circuits in the buildings, it is preferably set outside the walls, so as to be directly reached for said maintenance of the filter element.

Said filter element may be advantageously implemented either in a plastic or a metallic material such as for example brass, steel or suitable alloys.

The filter element is permeable to the fluid which flows into the connecting element, preferably water, and catches the impurities suspended in the fluid. For example, the filter element may comprise one or more filters of the mechanical, chemical, electrochemical or electromagnetic types.

Preferably, the filter element is of the mechanical type, suitable to catch solid impurities having predetermined sizes. According to a preferred aspect of the present invention, the filter element comprises at least one baffle which can be inserted into said channel. The baffle is provided with a plurality of apertures to allow the fluid to flow. The apertures may have a gauged section in order to allow the flowing only of those particles having certain sizes.

The shape of the baffle (and the shape of the filter element in general) also depends on the shape of the channel section inside the connection. In fact, the channel may have a circular section, a square section, a hexagonal section, etc.. Preferably, the shape of the baffle matches the shape of the channel section, such that the filter element may intercept the whole fluid flow which flows into the channel.

The filter element can be set into the channel of the connecting element in different manners being equivalent to one another, for example the filter element may slide on a guide being transversal to the channel, according to a guillotine coupling. Preferably, said filter element can be screwed into the body of the connecting element and once it has been screwed it intercepts the fluid flow, such as water, being supplied from the external line.

The filter element may designed in different manners according to the use which it is addressed to. For example, it may comprise a netting made of plastic or metallic material which can be set in the channel, in a transversal position relative to its axis. This solution is particularly effective for stopping the sand or the limestone which may exist for example in a water flow in the pipelines for domestic use. The mesh of the wire netting can be sized in order to stop the particles having predefined sizes.

Moreover, the filter element can be of a multilayer type, comprising for example two wire nettings, an element made of a spongy material being interposed therebetween. This solution allows a filtering of the fluid to be carried out by means of spongy elements, and may be applied for example either to hydraulic systems for aquariums, or pump or supply impeller water or oil supply circuits.

The filter element may be advantageously of a washable type, for example either by means of a simple water jet or through the treatment with a specific product, such as to be cleaned from impurities. For example, if the connecting element according to the invention is employed in the hydraulic circuits in private dwellings, this characteristic allows the maintenance costs of these circuits to be drastically reduced. In fact, if the water particles clog the filter element, thus reducing the flow of the water supplied, it is sufficient to extract the filter element from the body of the connecting element, then clean it and insert it again into the same body in order to restore the proper functioning of the respective circuit. This operation does not require expensive actions by skilled operators, but it can be performed by the usual user of the circuit.

According to an embodiment of the present invention, the filter element is associated to a filtered impurities collecting tank. Preferably, the tank is set into the channel inside the connection such as to collect the impurities being stopped either by the baffle or by other equivalent devices and then precipitated, and it can be extracted from the body of the connecting element together with the filter element.

According to a particular embodiment of the invention, the connecting element comprises a stop valve having the function of stopping the fluid flow through the channel inside the body of the connection. This valve may be provided either upstream or downstream of the filter element being provided within the connecting element, as already said. Preferably, the stop valve is provided upstream of the filter element, for example in an intermediate position between said filter element and the inlet section. By closing the stop valve it is possible to stop the fluid flow upstream of the filter element, thus facilitating the separation of the latter from the body of the connecting element.

According to a further embodiment of the present invention, the connecting element comprises a check valve having the function of preventing the fluid from flowing through the connection itself, in the opposite direction to the inlet section.

In practice, the check valve is for example provided at the outlet section of the connecting element and prevents the fluid from flowing back into the channel and, hence, from flowing back into its respective supply line. Consequently, the check valve is set downstream of the filter element, being interposed between the latter and the outlet section.

According to a further embodiment, the connecting element is equipped both with said stop valve and the check valve.

In the supply line, the fluid may reach a high speed, and hence, the motion thereof can be of a turbulent type. Furthermore, the fluid can be subjected to sudden changes in the flow or direction. For example, the water supply pipelines in private dwellings are equipped with several valves and faucets for adjusting the water flow and provide a plurality of changes of direction that are essential to supply water to different rooms. Because of the strong turbulence, the sudden changes in the flow rate or direction, the water flow which flows through the connecting element can transmit harmful vibrations to the element itself. For the reason described above, the connecting element may be equipped with a device having the function of absorbing the vibrations transmitted by the fluid.

Preferably, the absorption of the vibrations, or the partial reduction thereof, is obtained by using an elastically deformable element which covers part of the internal surface of the channel of the connecting element. Advantageously, the deformable element can absorb at least partially possible "water hammers", being caused for example by sudden changes in the flow rate of the flowing fluid.

A further advantageous is given by the deformable element ability to reduce possible impacts due to the fluid against a surface of the channel inside the connecting element. For example, if the connecting element is of an eccentric shape type, i.e. when the channel has a generically S-course, the deformable element allows to at least partially reduce the impact caused by the fluid while entering the connecting element and bumping against a curved portion of the channel.

The vibration absorbing device can be set along the channel of the connection either upstream or downstream of the filter element, for example in an intermediate position relative to the filter element and the stop valve. Preferably, the vibration absorbing device is set into the channel of the connection at the inlet section, for example near curves or section reduction of the channel.

As will be understood by those skilled in the art, the connecting element of the invention allows the filter element to be simply and quickly cleaned and, accordingly, allows the maintenance costs of its respective hydraulic circuit to be drastically reduced. Furthermore, the connecting element according to the invention, being equipped with the vibration absorbing device, is much more noiseless relative to the conventional connecting elements. If the connecting element is provided with the stop valve, it allows to operate on the filter element with no need to isolate the respective supply line upstream, by simply stopping the flow by means of this valve upstream of the same filter element. Furthermore, the connecting element may be equipped with a check valve which prevents the fluid from flowing back into the respective supply line.

Therefore, the connecting element of the invention is extremely useful in the field of hydraulic circuits in buildings, such as for example a connecting element of water lines in private dwellings. However, it can be employed, with the same advantages, for connecting hydraulic circuits of the industrial type, such as either oil supply or delivery circuits to machinery, or coolant circulating circuits, etc..

Further characteristics and the advantages of the present invention will be better understood from the following description, which is given by way of illustrative and non-limiting example with reference to the annexed schematic drawings, in which:
- figure 1 is a sectional view of a connecting element according to the present invention;
- figure 2 is a sectional view of a second embodiment of the connecting element according to the present invention;
- figure 3 is a sectional view of a third embodiment of the connecting element according to the present invention;
- figure 4 is a sectional view of a fourth embodiment of the connecting element according to the present invention;
- figure 5 is a sectional view of a fifth embodiment of the connecting element according to the present invention;
- figure 6 is a perspective view of the connecting element from figure 5;
- figure 7 is a sectional perspective view of the connecting element from figure 5.

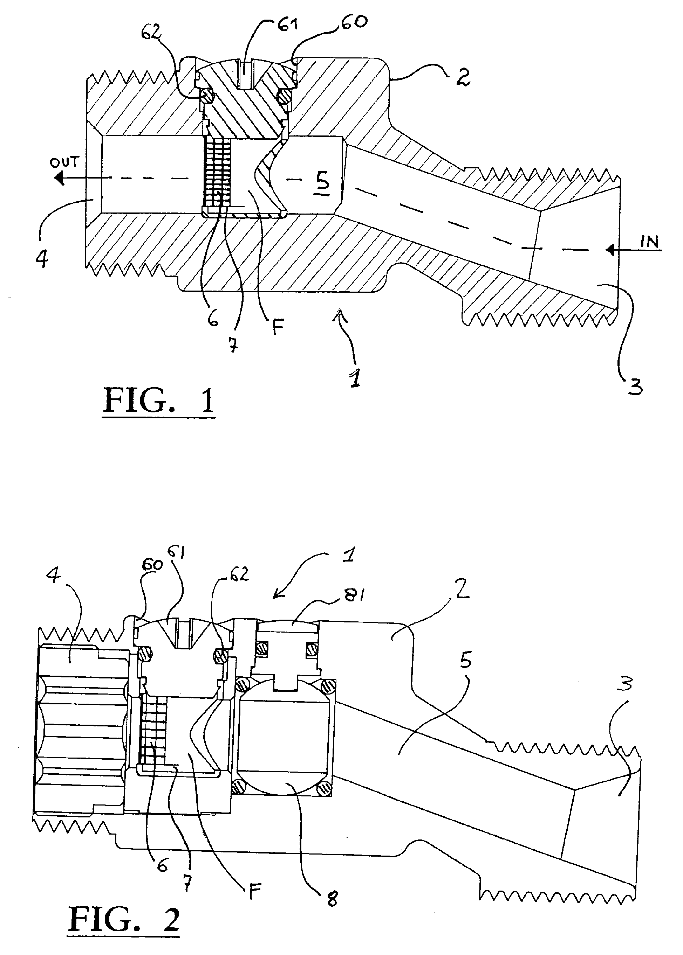

Figure 1 shows a connecting element 1 according to the present invention. Particularly, the element 1 is shown in a longitudinal section relative to IN-OUT axis. The connection 1 comprises a body 2 in which a channel 5 allowing a fluid to flow from the inlet section 3 to the outlet section 4 is obtained.

As it can be seen, the connecting element 1 has an eccentric shape. Generally, the connection 1 can have different shapes, i.e. the channel 5 can be either straight or curved. The channel 5 may also have a U-course, an S-course, it may form a double curve, etc..

The inlet 3 and outlet 4 sections can be coupled with different portions of a water supply line, for example through a traditional screw coupling.

The fluid supplied to the connection 1 from figure 1 is water. Particularly, the water is supplied by a line (not shown) to the inlet section 3 according to a direction being substantially parallel to the direction of arrow IN. The water flows through the channel 5 in the same direction and reaches the outlet section 4, thus being delivered to the direction of arrow OUT. Downstream of the section 4 there may be provided a pipeline, a flexible duct, a faucet, a water supply line for showers, a boiler, a water-heater, etc..

If the connection 1 is employed in the industrial field, for example in a supply circuit of a lubricate coolant supplied to a lathe or a milling machine, downstream of the section 4 there may exist a collecting tank, a nozzle, a mixer, etc..

The connecting element 1 is provided with a filter element F being coupled with the body 2 in a removable manner. Particularly, the filter element F is inserted into an aperture 60 which communicates the channel 5 with the outside. The coupling between the aperture 60 and the element F is preferably tight. When the filter F is coupled with the body 2, it intercepts the fluid flowing into the channel 5, thus stopping the possible suspended impurities. The filter F can be removed from the aperture 60 and, hence, from the connecting element 1.

In the embodiment shown in figure 1, the filter element F can be inserted into the channel 5 of the body 2 by means of a screw coupling in the aperture 60 being transversal to the channel 5. This solution is particularly advantageous because the access to the filter element F, for example in order to clean or replace the latter, is simple and can be obtained in short times also from those unskilled in the art, with an obvious saving in the maintenance costs of the circuit provided with the connection 1.

The filter element F from figure 1 comprises a baffle 6 fastened to a pin 61 which can be screwed into the body 2. The baffle 6 has the function of filtering the water or the fluid flowing through the channel 5. According to the use which the connection 1 is addressed to, the baffle 6 may comprise some wire or plastic netting, spongy elements, drilled bulkheads, etc.. In the specific case shown in figure 1, the baffle 6 has the function of stopping possible sand or limestone particles being in the water, and for this reason it consists of a gauze 6, made of wire or plastic, having a mesh of suitable sizes.

Alternatively, in the case where the baffle 6 is employed for filtering fluids different from water, it may comprise spongy elements, some gauze with meshes having different widths, etc.. Furthermore, the filter element F could be destined to filter an alimentary fluid and for this reason it may comprise a cartridge containing a suitable and compatible material.

Preferably, the filter F is associated to a tank 7 for collecting the filtered impurities. In the embodiment shown, the tank 7 is arranged under the gauze 6, such as to collect the solid particles being stopped by the same gauze 6. Advantageously, when the filter element F is unscrewed from the body 2, the tank 7, being integral to the pin 61, is extracted from the channel 5. In this manner, the tank 7 can be emptied out from the impurities which are, in case, contained therein. Therefore, the tank 7 allows the channel 5 to be cleaned from the impurities which could accumulate near the same gauze 6 even when the gauze 6 is extracted from the connection 1.

The tight coupling of the pin 61 with the body 2 is ensured, in the embodiment illustrated, by a suitable O-ring 62. Preferably, the pin 61 is provided with a notch suitable to allow the coupling with a tool suitable to unscrew the filter element F, such as a screwdriver. Alternatively, the pin 61 can be equivalently provided with a hand-wheel, an handle (lever) or a knob for the manual operating by the user.

According to a further embodiment, the pin 61 can be coupled to the outside with a spindle (pivot) (not shown) allowing the remote operation of the pin 61. For example, the connection 1 can be built in a niche obtained inside a wall and the spindle can be set so as to cross the same niche, thus protruding outside. This spindle can be, in turn, provided either with a notch for coupling with a screwdriver, or can be provided with a hand-wheel, a knob or elements equivalent thereto.

The maintenance of the filter element F is particularly simple. For example, if the connection 1 is provided upstream of a thermostatic faucet in a private dwelling, the same user can clean the gauze 6, simply by unscrewing the pin 61 from the connection 1 with a screwdriver and rinsing the gauze 6. Once the gauze 6 has been cleaned (or replaced if necessary), the pin 61 can be screwed again into the body 2 of the connection 1. It will be appreciated that the maintenance costs of the hydraulic circuit are reduced thanks to the easy cleaning actions of the filter F, and these operations neither require specialized operators, nor the disassembling of the supply line.

In order to uncouple the filter element F from the body 2 the water supply needs to be interrupted upstream of the filter element F. This can be carried out by closing a faucet, such as the main faucet of the private dwelling, and by interrupting the water flow in the supply line to the connection 1. In this case, disadvantageously also other supply lines connected to the same main faucet can be left isolated. Figures 2 and 4-7 show different embodiments of the connection 1 according to the invention which solve this drawback, thus allowing to isolate only the connection 1 rather than other lines of the same circuit upstream of the same connection.

As it can be seen in figures 2 and 4-7, the connection 1 may comprise a valve 8 for stopping the fluid, preferably arranged upstream of the filter element F. The stop valve 8 can be of the conventional type; in the annexed figures the valve 8 is of a ball-shaped type, being controlled by a spindle 81.

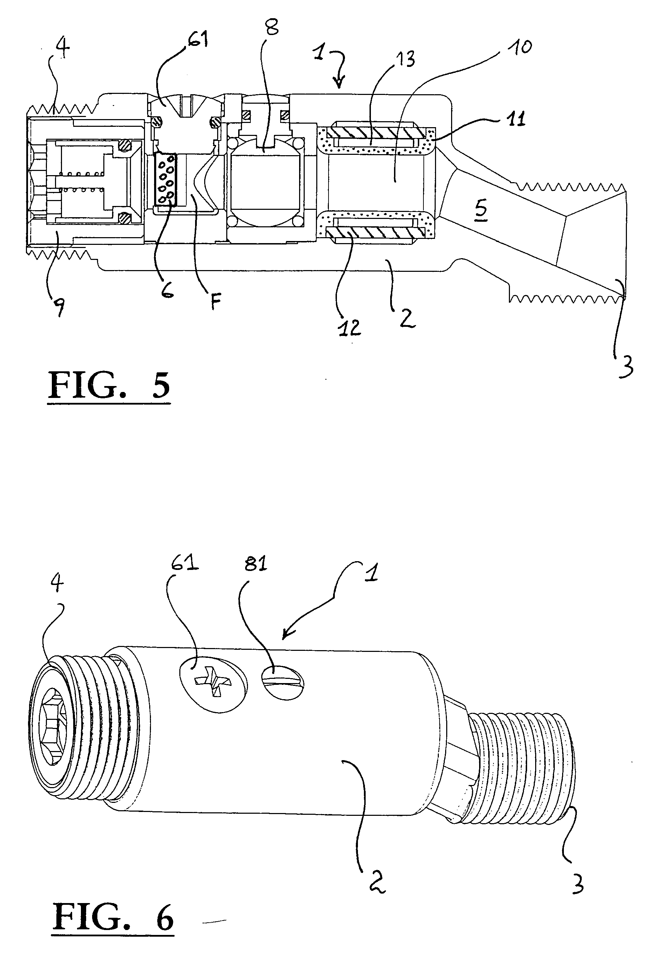

Due to the valve 8, the maintenance of the connection 1 and the line downstream are simplified. The water can be blocked by the valve 8 in the channel 5, with no need to insolate the line upstream of the connection. Therefore, the filter F can be extracted for maintenance. Figure 6 shows the spindle 81 of the stop valve 8 as well as the screw 61 of the filter element F. It will be understood by those skilled in the art that the spindle 81 and the screw 61 may be externally equipped with hand-wheels, handles, knobs or similar devices in order to facilitate the manual operating by the user. Moreover, in order to allow the remote operating of the stop valve 8 and the filter element F, these elements may be each provided with a remote control device, such as an extension being coupled with the spindle 81 and the screw 61. The possible extension may comprise for example a little shaft or a flexible tool allowing a user to carry out a remote rotation of the spindle 81 and/or the screw 61. The extension may be in turn provided with a hand-wheel, a knob, etc..

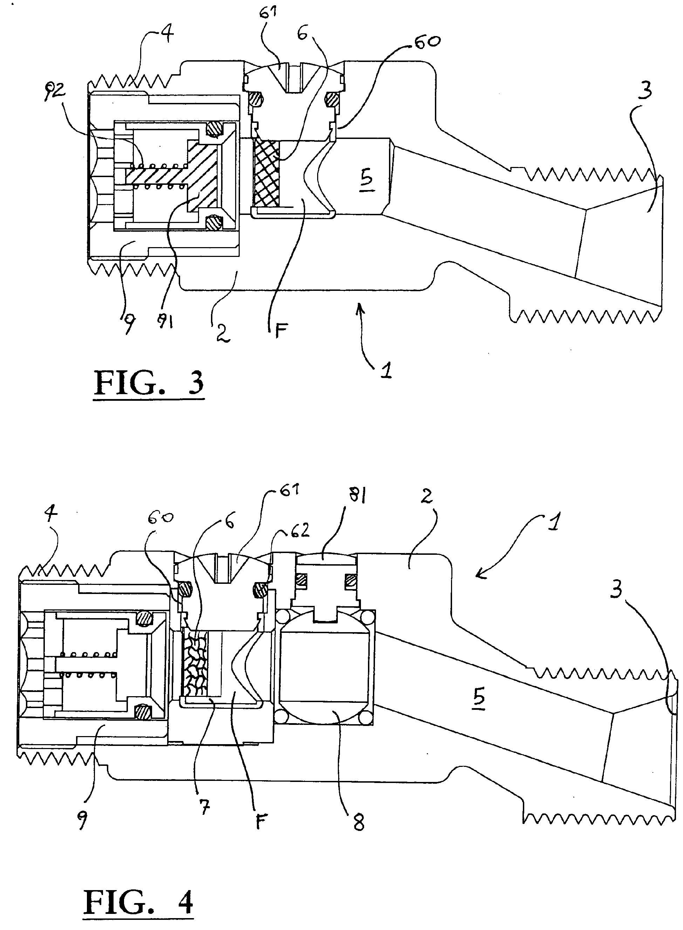

Moreover, the connection 1 may be equipped with a check valve having the function of preventing the fluid from flowing back into its respective supply line. Figures 3-7 show a connection 1 according to the present invention being provided with a check valve 9. Preferably, the valve 9 is provided in the channel 5 downstream of the filter element F. The valve 9 shown is of a conventional type and it is provided with a shutter 91 suitable to selectively open and close the channel 5 according to the compression or extension movement of the stop spring 92. Due to the check valve 9, fluid is prevented from flowing through the channel 5 in the opposite direction to the supplying direction, i.e. in the opposite direction to the IN direction from figure 1. For example, in this manner the risk that the water treated, or employed in a machinery, may flow back into the supply line thus contaminating the water upstream of the connection 1 is reduced.

The embodiment shown in figure 4 provides both the stop valve 8, and the check valve 9. The valves 8 and 9 are preferably arranged behind the filter element F, so as to reduce the pressure losses in the line.

Figures 5-7 show a further embodiment of the connection 1 according to the present invention, in this case being provided with a device 10 for absorbing the vibrations transmitted by the fluid to the body 2. The device 10 comprises a portion 11 which can be elastically deformed either to at least partially absorb the changes in the flow rate of the fluid entering the channel 5, or to at least partially absorb the turbulence thereof. The portion 11 is preferably a sheathing which is fastened to a bush 12 being inserted into the duct 5. A gap 13 allowing the sheathing to expand can be found between the sheathing 11 and the bush 12. By deforming, the sheathing 11 is able to absorb either the "water hammers" transmitted by the fluid to the connection 1, or the impact of the fluid entering a curved length of the channel 5 at high speed, etc.. Therefore, the vibration absorbing element 10absorb allows to reduce the noise caused by the pipelines because of the vibrations transmitted thereto by the fluid supplied.

Preferably, the sheathing 11 is implemented in silicone. Alternatively, the sheathing 11 may be implemented in a material having mechanical characteristics similar to the characteristics of the silicone, such as rubber or a similar material.

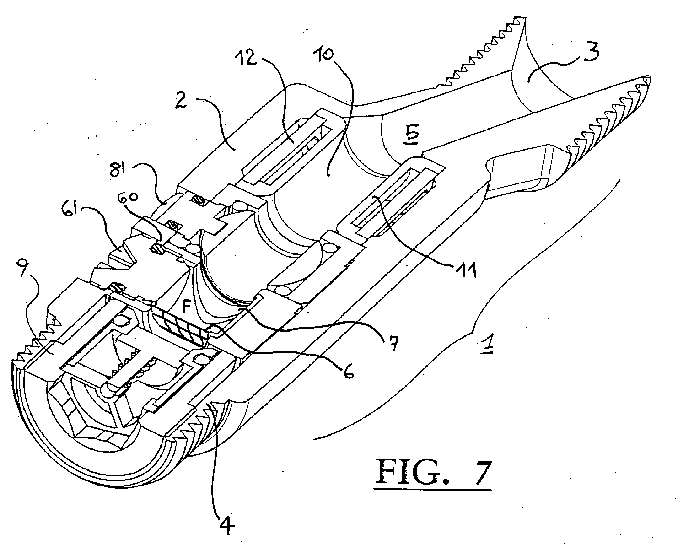

In the embodiment shown, the device 10 is set upstream of the stop valve. Generally, the device 10 may be indifferently set along the channel 5, but preferably it is provided either at the inlet section 3 or at a curve or a section change of the channel 5, as shown in details in figure 7.

## Claims

1. A connecting element (1) for hydraulic circuits, of the type comprising a body (2) being provided with at least one channel (5) having an inlet section (3) and an outlet section (4), said channel (5) being connectable with a fluid supply line, **characterized in that** said body is further provided with at least an aperture (60) which opens, to the outside, into said channel (5) between said inlet section (3) and said outlet section (4), and that at least a filter element (F) is insertable in a removable manner into said at least one aperture (60) in order to intercept said fluid in said channel (5).

2. The connecting element (1) according to claim 1, **characterized in that** said filter element (F) being coupled with said body (2) is permeable to said fluid and impermeable to the solid impurities suspended in said fluid, having predetermined sizes.

3. The connecting element (1) according to claim 1 or 2, **characterized in that** said filter element (F) comprises at least one baffle (6) which are insertable into said channel (5), said baffle being equipped with a plurality of apertures for the flowing of said fluid.

4. The connecting element (1) according to claim 3, **characterized in that** said baffle (6) is associated to a tank (7) for collecting said impurities.

5. The connecting element (1) according to claim 3 or 4, **characterized in that** said filter element (F) is positioned in a removable manner in said channel (5).

6. The connecting element (1) according to any preceding claim, **characterized in that** said filter element (F) is washable.

7. The connecting element (1) according to any preceding claim, **characterized in that** it comprises a stop valve (8) for stopping said fluid.

8. The connecting element (1) according to claim 7, **characterized in that** said stop valve (8) is interposed between said filter element (F) and said inlet section (3).

9. The connecting element (1) according to any preceding claim 1 to 6, **characterized in that** it comprises a check valve (9) suitable to prevent said fluid from flowing through said inlet section (3).

10. The connecting element (1) according to claim 9, **characterized in that** said check valve (9) is interposed between said filter element (F) and said outlet

11. The connecting element (1) according to any preceding claim 1 to 8, **characterized in that** it comprises a check valve (9) according to claim 9 or 10.

12. The connecting element (1) according to any preceding claim, **characterized in that** it comprises a absorbing element (10) to absorb the vibrations absorbtransmitted by said fluid to said body (2) while flowing into said channel (5).

13. The connecting element (1) according to claim 12, **characterized in that** said vibration absorbing element (10) absorbcomprises a portion (11), elastically deformable, and which covers at least partially the internal surface of said channel (5).

14. The connecting element (1) according to claim 13, **characterized in that** said portion (11) is made of silicone and/or rubber.

15. A hydraulic circuit **characterized in that** it comprises at least one connecting element according to the preceding claims.

16. Use of the hydraulic circuit according to claim 15 for the assembling of hydraulic circuits in the buildings.

17. The use of the hydraulic circuit according to claim 15 for the assembling of hydraulic circuits of the industrial type.
